# EUROPÄISCHE PATENTSCHRIFT

(11) **EP 1 905 654 B1**
(45) Veröffentlichungstag und Bekanntmachung des Hinweises auf die Patenterteilung: **03.12.2008**
(21) Anmeldenummer: 06020255.3
(22) Anmeldetag: 27.09.2006
(51) Int. Cl.: B60R 13/08, F16L 59/08

(54) **Hitzeschildanordnung**
Thermal shield
Ensemble bouclier thermique

(43) Veröffentlichungstag der Anmeldung: 02.04.2008
(73) Patentinhaber: REINZ-Dichtungs-GmbH, 89233 Neu-Ulm (DE)
(72) Erfinder: Schweiggart, Franz, 89284 Pfaffenhofen (DE)
(74) Vertreter: Tomerius, Isabel

(56) Entgegenhaltungen:
- EP-A1- 0 881 423
- WO-A2-20/04045843
- DE-A1- 3 834 054
- GB-A- 2 270 555
- US-A1- 2004 142 152

## Beschreibung

Die Erfindung betrifft eine Hitzeschildanordnung mit einem Hitzeschild zum Abschirmen eines Gegenstandes gegen Hitze und/oder Schall mit einer dem Gegenstand zugewandten Innenoberfläche und einer von dem Gegenstand abgewandten Außenoberfläche sowie mindestens einer Ausnehmung, die durch den Hitzeschild mit Innen- und Außenoberfläche hindurch geht. Derartige Hitzeschilde werden beispielsweise in Motorräumen von Kraftfahrzeugen eingesetzt, insbesondere im Bereich der Abgasanlage, um benachbarte temperaturempfindliche Bauteile und Aggregate gegenüber unzulässiger Erhitzung zu schützen. Oft dienen die Hitzeschilde dabei gleichzeitig als Schallschutz. Konkret können solche Hitzeschilde beispielsweise zum Abschirmen eines Katalysators oder Vorkatalysators, eines Partikelfilters oder sonstiger Komponenten im Bereich des Abgasstrangs oder eines Turboladers eingesetzt werden. Im Hinblick auf einen kontinuierlichen Betrieb ist es für diese Komponenten oft nicht nur wichtig, vor einer zu starken Temperaturbelastung geschützt zu werden, sondern die Betriebstemperatur sollte möglichst während der gesamten Betriebsdauer keinen zu starken Schwankungen unterliegen.

Eine möglichst konstante Betriebstemperatur ist beispielsweise für die zur Abgasreinigung eingesetzten Komponenten von Vorteil, da auf diese Weise eine gleichmäßigere Abgasreinigungswirkung erzielt werden kann. Gleichzeitig lässt sich auch die Lebensdauer der Komponenten, benachbarter Gehäuseteile und gasführender Komponenten verlängern. Von besonderer Bedeutung sind schnelles Aufheizen und das Konstanthalten der Betriebstemperatur im Hinblick auf das Einhalten der zukünftigen EU-Abgasnorm Euro 5. Hier werden neben den Abgasgrenzwerten in der Normalbetriebsphase eines Motors auch Abgasgrenzwerte der Kaltstartphase miteinbezogen. Bekanntlich unterscheidet sich der Wirkungsgrad der Abgasreinigungskatalysatoren für die im Abgas enthaltenen Schadstoffe in Abhängigkeit von der Temperatur. So ist beispielsweise der Ausstoß von Kohlenwasserstoffen und Kohlenmonoxid zu Beginn der Kaltstartphase besonders hoch. Dies ist hauptsächlich darauf zurückzuführen, dass der Katalysator seine Betriebstemperatur noch nicht erreicht hat. Zur Reduktion dieser Schadstoffe ist es daher erforderlich, die Betriebstemperatur des Katalysators möglichst rasch zu erhöhen. Andererseits darf die Betriebstemperatur jedoch nicht zu sehr ansteigen, da dies einerseits zur Vermehrung anderer Schadstoffe wie beispielsweise Stickoxiden im Abgas führt und andererseits eine zu hohe Temperatur den Katalysator selbst schädigen könnte.

In anderen Fällen kann es beispielsweise wünschenswert sein, während einer bestimmten Betriebsphase eine gegenüber anderen Betriebsphasen höhere oder niedrigere Temperatur einstellen zu können. So kann zum Beispiel bei einem Partikelfilter eine Betriebsphase höherer Temperatur durchlaufen werden, in der im Partikelfilter abgelagerte Partikel oxidativ entfernt werden. Bisher war es üblich, diese erhöhte Temperatur durch motorische Maßnahmen und oder durch zusätzliches Einspritzen von Brennstoffen zu erreichen. Nach vollendeter Partikelentfernung wurden die Maßnahmen wieder auf Normalbetrieb zurückgefahren. Dieses Vorgehen ist jedoch sehr aufwändig, und benötigt zusätzliche Energie.

Angesichts der vorstehend beschriebenen Probleme ist es die **Aufgabe** der vorliegenden Erfindung, eine Hitzschildanordnung anzugeben, die geeignet ist, die Betriebstemperatur eines von ihr abgeschirmten Gegenstandes auf einen vorgegebenen Bereich einzustellen. Die Hitzeschildanordnung sollte es einerseits erlauben, die Temperatur möglichst konstant zu halten und gleichzeitig ein möglichst schnelles Erreichen der Betriebstemperatur zu gewährleisten. Andererseits sollte die Hitzeschildanordnung auch einen wahlweisen Betrieb bei verschiedenen vorgegebenen Temperaturen ermöglichen.

Die Lösung dieser Aufgabe gelingt mit der Hitzeschildanordnung gemäß Anspruch 1. Bevorzugte Ausführungsformen sind in den Unteransprüchen beschrieben.

Die erfindungsgemäße Hitzeschildanordnung umfasst einen Hitzeschild zum Abschirmen eines Gegenstandes gegen Hitze und/oder Schall mit einer dem Gegenstand zugewandten Innenoberfläche und einer vom Gegenstand abgewandten Außenoberfläche. In dem Hitzeschild ist eine Ausnehmung vorhanden, die durch Innen- und Außenoberfläche hindurch geht. Erfindungsgemäß ist diese Ausnehmung zumindest bereichsweise von einem Verschluss verschließbar, der mittels einer Betätigungsvorrichtung in Abhängigkeit von einer für die Funktion des Gegenstandes relevanten Regelgröße geöffnet und geschlossen werden kann.

Durch das Öffnen des Verschlusses wird die im Hitzeschild ausgebildete Ausnehmung freigegeben, so dass durch den so entstandenen Durchlass eine bessere Temperaturregulierung ermöglicht wird. Zum Beispiel kann zwischen dem abzuschirmenden Gegenstand, der benachbart zur Innenoberfläche des Hitzeschilds angeordnet ist, und dem Hitzeschild angestaute heiße Luft durch die freigegebene Ausnehmung entweichen und so die Temperatur im Bereich um den abzuschirmenden Gegenstand abgesenkt werden. Umgekehrt ist es beispielsweise ebenso gut möglich, durch die freigegebene Ausnehmung kältere Luft in Richtung auf den abzuschirmenden Gegenstand einzulassen und so die Temperatur in dessen Umgebung zu reduzieren. Ebenfalls möglich ist es, durch die geöffnete Ausnehmung hindurch Warmluft in Richtung auf den abzuschirmenden Gegenstand hin zuzuführen oder Kaltluft abzulassen, wenn dessen Temperaturerhöhung gewünscht wird. Außerdem kann die Ausnehmung in einer Betriebsphase erhöhter Temperatur zumindest teilweise verschlossen werden, während sie in einer Betriebsphase niedrigerer Temperatur zumindest teilweise freigegeben wird, so dass angestaute Wärme durch die Öffnung entweichen kann. Dabei sind grundsätzlich auch mehr als zwei Betriebsphasen unterschiedlicher Temperatur in Abhängigkeit von der Öffnungsgröße der Ausnehmung einstellbar.

Als Regelgröße, von der abhängig der Verschluss geöffnet oder geschlossen wird, kommt wenigstens eine der folgenden Messgrößen in Betracht:
- eine Temperatur,
- ein Druck ,
- eine Geschwindigkeit,
- ein akustisches Signal
- ein Abgaswert,
- ein Volumenstrom und
- eine Betriebsdauer.
Bei der bevorzugten Anwendung der Erfindung im Bereich von Verbrennungsmotoren kommen als Messgrößen ganz allgemein diejenigen in Frage, die im Bereich des Verbrennungsmotors gemessen werden können.

Bei der Temperatur handelt es sich zweckmäßig um eine Temperatur in der Umgebung des abzuschirmenden Gegenstands oder um die Bauteiltemperatur des Gegenstands oder eines anderen Bauteils, sofern diese Temperatur Auswirkungen auf die Funktion des abzuschirmenden Gegenstandes hat. Durch Messung der Temperatur kann unmittelbar festgestellt werden, ob dem abzuschirmenden Gegenstand eine Überhitzung droht. Falls ja, kann die Betätigungsvorrichtung dem durch Öffnen des Verschlusses im Hitzeschild entgegenwirken. Umgekehrt kann bei zu starker Abkühlung der Verschluss mittels der Betätigungsvorrichtung wieder geschlossen werden.

Als Druck kann insbesondere der Innendruck des abzuschirmenden Gegenstands gemessen werden. Eine mögliche Anwendung liegt bei Partikelfiltern, bei denen der Innendruck mit zunehmender Beladung mit Partikeln ansteigt. Der Durchsatz verschlechtert sich entsprechend, und zum Erhalt der erforderlichen Reinigungswirkung muss der Partikelfilter von den abgelagerten Partikeln befreit werden. Dies kann dadurch erfolgen, dass die Temperatur im Inneren des Partikelfilters so stark erhöht wird, dass die Partikel oxidieren und aus dem Filter ausgeblasen werden. Die erforderliche Temperaturerhöhung kann erfindungsgemäß durch Schließen des Verschlusses erfolgen oder zumindest unterstützt werden, wodurch sich Hitze im Bereich des Hitzeschilds um den Partikelfilter anstaut. Nach Ablauf einer vorgegebenen Zeit oder alternativ bei Erreichen eines niedrigeren Innendrucks, der einen regulären Betrieb des Partikelfilters ermöglicht, kann der Verschluss wieder geöffnet werden, so dass der Betrieb bei der gewünschten Filterbetriebstemperatur abläuft.

Um den abzuschirmenden Gegenstand bei einer gewünschten Betriebstemperatur betreiben zu können, kann - wie erwähnt - unmittelbar die Temperatur des Gegenstands selbst oder in seiner Umgebung gemessen werden. Anstelle der Temperatur können aber auch andere Messgrößen gemessen werden, die Auswirkungen auf die Betriebstemperatur des Gegenstands haben. Ein solcher Parameter ist beispielsweise eine Strömung, die beim Entlangströmen am abzuschirmenden Gegenstand zu einer Abkühlung desselben führen kann. In Abhängigkeit von der Strömungsgeschwindigkeit kann der Verschluss also bei starker Strömung mehr verschlossen werden und bei geringerer Strömung mehr geöffnet, um eine gewünschte Betriebstemperatur einzustellen. Wird der Gegenstand beim Betrieb bewegt, kann anstelle einer Strömungsgeschwindigkeit auch die Fahrtgeschwindigkeit gemessen werden.

Akustische Signale können ermittelt werden, wenn es gilt, den Gegenstand, der selbst Schall produziert, gegen die Umgebung abzuschirmen. Bei starker Schallentwicklung wird der Verschluss zweckmäßig geschlossen. Gemessen wird bevorzugt der Schalldruck.

Auch Abgaswerte können als Messgrößen dienen. Beispielsweise können auf an sich bekannte Weise Konzentrationen eines oder mehrere Gase im Abgas bestimmt werden. Wie eingangs erwähnt, ändert sich die Effektivität des Katalysators für die verschiedenen Schadstoffe in Anhängigkeit von der Temperatur. Die Messung der Abgaswerte für diese Schadstoffe erlaubt also Rückschlüsse darauf, ob sich die Temperatur im gewünschten Bereich befindet. Weichen die gemessenen Abgaswerte von vorgegebenen Sollwerten ab, kann durch Temperaturkorrektur die Abgasreinigungswirkung wieder in den Sollbereich gebracht werden. Erfindungsgemäß geschieht dies beispielsweise durch Öffnen oder Schließen des Verschlusses und entsprechende Regulierung des Öffnungsquerschnitts der Ausnehmung im Hitzeschild in Abhängigkeit von einem oder mehreren Messwerten der Schadstoffkonzentration im Abgas.

Neben den genannten Messgrößen kommen prinzipiell alle solche Messgrößen in Betracht, die einen Einfluss auf die Funktion des abzuschirmenden Gegenstands haben können oder eine Aussage über den Betriebszustand oder eine sonstige Eigenschaft des Gegenstandes beinhalten. Die Betätigungsvorrichtung kann in Abhängigkeit von nur einer Messgröße agieren oder aber auch in Abhängigkeit mehrerer Messgrößen.

Zur Messung der Messgröße umfasst die erfindungsgemäße Hitzeschildanordnung zweckmä-βig wenigstens eine geeignete Messvorrichtung. Bei der Messvorrichtung kann es sich grundsätzlich um eine im Stand der Technik zur Messung der jeweiligen Messgröße übliche Vorrichtung handeln. Zur Temperaturmessung kann beispielsweise ein Temperatursensor verwendet werden, der entweder am abzuschirmenden Gegenstand, am Hitzschild oder an anderer Stelle in der Nähe des Gegenstands angebracht ist. Analog lassen sich andere Sensoren (Druck, Schalldruck, elektrochemischer Wert) verwenden, die im Stand der Technik bereits bekannt sind. Idealerweise werden Sensoren verwendet, die sich unabhängig von anderen Teilen auswechseln lassen. In vielen Fällen können auch bereits in der Gesamtvorrichtung, die die erfindungsgemäße Hitzeschildanordnung umfasst, vorhandene Messvorrichtungen verwendet werden, beispielsweise Messvorrichtungen zur Messung von Abgaswerten oder Fahrzeuggeschwindigkeiten.

Zweckmäßig umfasst die Hitzeschildanordnung zudem ein Mittel zur Auswertung der Messergebnisse sowie ein Steuerungsmittel zur Steuerung der Betätigungsvorrichtung aufgrund der Auswertung der Messergebnisse. Beide Mittel können räumlich in einer Vorrichtung kombiniert sein und getrennt von oder integriert in der Betätigungsvorrichtung angeordnet sein. Es handelt sich jeweils um an sich bekannte Komponenten, die hier nicht näher beschrieben werden müssen. Wie bereits bei der Messvorrichtung können auch für das Auswertungs- und Steuerungsmittel bereits in der Gesamtvorrichtung ohnehin vorhandene Mittel verwendet werden.

Bei der Betätigungsvorrichtung kann es sich zum Beispiel um eine pneumatische, hydraulische oder elektrische Betätigungsvorrichtung handeln. Bevorzugt werden ein Stellmotor als elektrische oder eine Unterdruckdose als pneumatische Betätigungsvorrichtung eingesetzt. Die Verbindung zwischen Betätigungsvorrichtung und Verschluss ist grundsätzlich beliebig. Beispielsweise kann eine Schub- oder Zugstange verwendet werden.

Die Ausnehmung kann entweder eine Durchgangsöffnung im Hitzschild sein oder auch eine Ausnehmung in einem Außenrandbereich des Hitzeschilds. Auch beide Varianten können in einem Hitzeschild miteinander kombiniert werden. Welche Möglichkeit gewählt wird, hängt unter anderem auch vom zur Verfügung stehenden Platz auf dem Hitzschild ab. Die Form der Ausnehmung ist grundsätzlich beliebig und ebenfalls hauptsächlich vom verfügbaren Raum abhängig. Die Größe der Ausnehmung wird in Abhängigkeit vom erforderlichen Wärmeaustausch gewählt und/oder im Hinblick auf die gewünschte Schallisolierung. Der erforderliche Öffnungsquerschnitt kann mit einer einzigen oder mehreren Ausnehmungen realisiert werden.

Der Verschluss kann grundsätzlich jede beliebige Form aufweisen, die geeignet ist, die Ausnehmung im Hitzeschild im erforderlichen Maß zu verschließen. Er kann in die Ausnehmung passend eingefügt werden oder die Ausnehmung abdeckend auf dem Hitzeschild angeordnet sein. Auch die Art und Weise, in der der Verschluss die Öffnung freigibt, ist grundsätzlich beliebig. Beispielsweise kann der Verschluss seitlich gegenüber der Öffnung verschoben und/oder verdreht werden und/oder beispielsweise nach Art einer Klappe von der Öffnung abgehoben werden. In den beiden erstgenannten Fällen wird der Verschluss bevorzugt mit einem Schieber überwiegend parallel zur Außenoberfläche des Hitzeschilds verschoben und/oder verdreht. In letzterem Fall kann der Verschluss grundsätzlich zu jeder Seite des Hitzeschildes hin öffnen. Aus Platzgründen ist es aber häufig zweckmäßig, dass der Verschluss sich zur Seite der Außenoberfläche des Hitzeschilds hin öffnet, da auf der Seite der Innenoberfläche zwischen Hitzeschild und abzuschirmendem Gegenstand häufig nicht hinreichend Platz vorhanden ist. Auch kann die Klappe aus mehreren Lamellen bestehen, die einzeln oder gemeinsam geöffnet oder geschlossen werden können. Das Material des Verschlusses kann nach Belieben gewählt werden. Vorzugsweise besteht der Verschluss aus dem gleichen Material wie der Hitzeschild. Der Verschluss wird je nach Art der Betätigung am Hitzeschild befestigt, beispielsweise mittels Scharnieren im Falle eines Klappenverschlusses, einer Schraub- oder Nietverbindung, die gleichzeitig den Drehpunkt liefert, im Falle eines Drehschiebers oder mittels Führungsschienen im Falle eines Schiebers. Ein Klappenverschluss kann gegebenenfalls auch an einem Gegenstand in der Nähe des Hitzeschildes befestigt werden und nicht am Hitzeschild selbst.

Eine bevorzugte Anwendung des erfindungsgemäßen Hitzeschildes ist, wie bereits erwähnt, das Abschirmen von Komponenten im Bereich eines Verbrennungsmotors und insbesondere im Bereich der Abgasanlage. Bei diesen Anwendungen besteht hauptsächlich die Gefahr, dass sich der abzuschirmende Gegenstand in Folge der im Bereich des Hitzeschildes angestauten Wärme überhitzt. Um dies zu verhindern, ist der erfindungsgemäße Hitzeschild zweckmäßig so ausgebildet, dass der Verschluss beim Überschreiten einer bestimmten Grenztemperatur geöffnet wird, so dass die angestaute Hitze aus dem Bereich zwischen Hitzeschild und abzuschirmendem Gegenstand entweichen kann. Solange die im Bereich des Hitzeschildes angeordneten Komponenten ihre Betriebstemperatur aber noch nicht erreicht haben, ist das Anstauen von Wärme im Bereich des Hitzeschildes durchaus sinnvoll, damit die Komponenten ihre optimale Betriebstemperatur möglichst schnell erreichen können. Aus diesem Grund ist der erfindungsgemäße Hitzeschild in dieser Variante bevorzugt so ausgelegt, dass der Verschluss bis zum Erreichen der Grenztemperatur geschlossen bleibt. Dabei muss, wie erwähnt, nicht die Temperatur unmittelbar gemessen werden, sondern es kann auch ein anderer Messwert als die Temperatur sein.

Eine weitere bevorzugte Anwendung liegt bei der Abschirmung von Partikelfiltern, insbesondere Dieselpartikelfiltern. Hier kann es, wie beschrieben, zweckmäßig sein, in einer bestimmten Betriebsphase die angesammelten Partikel bei erhöhter Temperatur oxidativ zu entfernen. Mit dem erfindungsgemäßen Hitzeschild kann die erforderliche Temperaturerhöhung besonders einfach und schnell erreicht werden. Im Unterschied zum Stand der Technik ist es häufig nicht mehr erforderlich, durch zusätzliche motorische Maßnahmen die Abgastemperatur zu erhöhen, auch wenn dies weiterhin möglich bleibt. Vielmehr kann durch ein Schließen des Verschlusses mittels der Betätigungsvorrichtung die Ausnehmung im Hitzeschild geschlossen werden. Daraufhin steigt die Temperatur im Bereich des Hitzeschilds und damit auch im Partikelfilter an. Reicht dieser Temperaturanstieg allein nicht zum Starten der oxidativen Reinigung aus, kann zusätzlich wie üblich das Kraftstoffgemisch motorisch angepasst oder Brennstoff direkt eingespritzt werden. Nach abgeschlossener Reinigung wird der Verschluss wieder geöffnet, eventuell die zusätzliche geänderte Einspritzung beendet, und die Temperatur im Bereich des Hitzeschildes sinkt wieder, so dass der Partikelfilter im regulären Betriebszustand weiterarbeiten kann.

Im Falle des Hitzeschildes für einen Partikelfilter oder ähnliches ist der Verschluss zweckmäßig bei niedrigerer Temperatur geöffnet und wird bei erhöhter Temperatur geschlossen. Bei dem für einen Katalysator beschriebenen Hitzeschild ist es bevorzugt umgekehrt. Hier wird der Verschluss mit sinkender Temperatur geschlossen, während er bei Temperaturerhöhung geöffnet wird. Beide Varianten sind im Rahmen der Erfindung entsprechend den Anforderungen realisierbar. Sie können auch in ein und demselben Hitzeschild gemeinsam genutzt werden.

Dabei ist es nicht unbedingt erforderlich, dass der Verschluss beispielsweise beim Überschreiten des vorgegebenen Grenzwertes schlagartig geöffnet und die Ausnehmung zu 100 % freigegeben wird, während bei einem Wert von kleiner oder gleich dem Grenzwert der Verschluss sofort vollständig geschlossen wird und die Ausnehmung ganz abdeckt. Es ist vielmehr ebenfalls möglich, dass das Öffnen und Schließen des Verschlusses innerhalb eines vorgegebenen Grenzmesswertintervalls stattfindet. Beispielsweise kann es sinnvoll sein, dass der Verschluss mit zunehmendem Abweichung von dem vorgegebenen Grenzwert die Ausnehmung zunehmend freigibt, so dass beispielsweise mit steigender Temperatur (mit stärker abweichendem Messwert) ein zunehmender Temperaturaustausch mit der Umgebung möglich wird. Umgekehrt kann sich der geöffnete Verschluss zunehmend wieder schließen, wenn sich die erhöhte Temperatur (oder ein anderer Messwert) in Richtung auf den Grenzwert hin wieder absenkt. Auf diese Weise ist eine kontinuierliche, der Umgebungstemperatur (oder dem relevanten Messwert) angepasste Temperaturkontrolle möglich, die es erlaubt, den vom Hitzeschild abgeschirmten Gegenstand bei einer im Wesentlichen konstanten und für diesen Gegenstand optimalen Arbeitstemperatur zu halten. Das Verschließen der Ausnehmung muss nicht zu einem hermetischen Abschluss der Öffnung führen. Ein gegenüber dem geöffneten Zustand deutlich reduzierter Temperaturaustausch ist im allgemeinen ausreichend. Das Vorstehende gilt für den Fall des Öffnens bei sinkendem und des Schließens bei höherem (Temperatur)-Messwert gleichermaßen.

In welchem Bereich der Grenzmesswert eingestellt wird, bei der der Verschluss in der erfindungsgemäßen Hitzeschildanordnung öffnet oder schließt, hängt maßgeblich davon ab, bei welcher Temperatur der Gegenstand, welcher mit dem erfindungsgemäßen Hitzeschild abgeschirmt werden soll, gehalten werden soll. Im Falle von Katalysatoren ist dies zweckmäßig die Temperatur, bei welcher die beste Abgasreduktion möglich ist. Bei Partikelfiltern kann einerseits die optimale Temperatur für die Partikelfiltration und andererseits in der Partikelentfernungsphase die beste Temperatur zur oxidativen Entfernung der Partikel eingestellt werden. Diese jeweilige optimale Arbeitstemperatur kann mit der erfindungsgemäßen Hitzeschildanordnung sehr rasch erreicht werden, da in der Aufwärmphase durch ein Verschließen der Ausnehmung mittels des Verschlusses Wärme im Bereich um den abzuschirmenden Gegenstand aufgestaut werden kann, so dass dieser sich rasch erwärmt. Andererseits kann ein zu starkes Überschreiten einer optimalen Arbeitstemperatur dadurch verhindert werden, dass der Grenzmesswert entsprechend eingestellt wird, bei dessen Überschreitung der Verschluss im Hitzeschild geöffnet wird und die Ausnehmung so je nach Messwert ganz oder teilweise freigibt. Zwischen Hitzeschild und abzuschirmendem Gegenstand angestaute Hitze kann durch die freigegebene Ausnehmung entweichen. Zusätzlich oder alternativ ist es möglich, durch die geöffnete Ausnehmung Kühlluft in Richtung auf den abzuschirmenden Gegenstand (beispielsweise den Katalysator, Partikelfilter o. ä.) einzublasen, um diesen zu kühlen.

Eine besonders gute Regelung der Temperatur im Bereich zwischen Hitzeschild und abzuschirmendem Gegenstand ist dann möglich, wenn zusätzlich zu der ersten Ausnehmung mit dem ersten Verschluss wenigstens eine weitere Ausnehmung vorhanden ist, die ebenfalls mit einem in Abhängigkeit von einer für die Funktion des abzuschirmenden Gegenstands relevanten Messgröße zu öffnenden und schließenden Verschluss verschließbar ist. Diese Messgröße kann, muss aber nicht, die gleiche Messgröße sein wie für den ersten Verschluss.

Der weitere Verschluss kann grundsätzlich wie oben beschrieben ausgebildet sein. Er kann ebenfalls von einer Betätigungsvorrichtung, wie sie vorstehend beschrieben wurde, geöffnet und geschlossen werden. Es ist jedoch auch möglich, die Betätigungsvorrichtung wegzulassen und einen in Abhängigkeit von einer Messgröße selbsttätig öffnenden und schließenden Verschluss zu verwenden. Bevorzugt handelt es sich dabei um einen in Abhängigkeit von der Temperatur öffnenden und schließenden Verschluss. Zweckmäßig weist der Verschluss daher ein Bimetallelement auf, das sich in Abhängigkeit von der Temperatur verformt. Das Bimetallelement kann ein Teil des Verschlusses sein, das sich relativ zur Ausnehmung verformt, oder ein separates Teil, das mit einem Schieber, Drehschieber oder einer Klappe zusammenwirkt und diese relativ zur Ausnehmung verschiebt.

Das Vorhandensein wenigstens eines weiteren Verschlusses und einer durch diesen verschließbaren Ausnehmung hat den Vorteil, dass die Temperatur im Bereich zwischen Hitzeschild und abzuschirmendem Gegenstand noch genauer eingestellt werden kann. Beispielsweise ist es möglich, die Betätigungsvorrichtung(en) und Verschlüsse so auszubilden, dass letztere sich bei Überschreiten verschiedener Grenzmesswerte nacheinander öffnen. Dies kann beispielsweise durch Speichern verschiedener Grenzmesswerte und entsprechendes unterschiedliches Ansteuern der Verschlüsse erreicht werden. Das Öffnen der Verschlüsse nacheinander kann beispielsweise so erfolgen, dass mit zunehmender Temperatur der freigegebene Gesamt-Öffnungsquerschnitt der Ausnehmungen ansteigt, so dass durch die freigegebenen Ausnehmungen zunehmend mehr Heißluft entweichen kann. Dadurch kann ein Überhitzen selbst bei sehr stark ansteigenden Temperaturen verhindert werden.

Ein weiterer Vorteil, der durch das Vorsehen mehrerer mit einem Verschluss verschließbaren Ausnehmungen erreicht werden kann, besteht darin, dass im Raum zwischen Hitzeschild und abzuschirmendem Gegenstand eine gezielte Strömungsführung möglich wird. Beispielsweise kann bei geöffnetem Verschluss durch eine oder mehrere der freigegebenen Ausnehmungen kühlere Luft in Richtung auf den Gegenstand eingelassen werden, während erwärmte Luft durch die übrigen Ausnehmungen ausströmt. Die Ausrichtungen der Ausnehmungen und Verschlüsse auf dem Hitzeschild erfolgt dabei zweckmäßig so, dass die ausströmende Warmluft nicht auf in der Umgebung des Hitzeschildes angeordnete temperaturempfindliche Teile gerichtet ist. Idealerweise ist die warme Abluft so gerichtet, dass sie einer im Bereich um den Hitzeschild vorherrschenden Außenströmung zugeführt und von dieser fortgetragen wird. Vorteilhaft ist es ebenfalls, wenn die in den Bereich zwischen Hitzeschild und abzuschirmendem Gegenstand eingeführte kühlere Luft aus dieser im Bereich um den Hitzeschild vorherrschenden Außenströmung zugeführt wird.

Wie schon vorstehend beschrieben, ist es auch im Fall der Zufuhr kühlerer Luft in den Bereich zwischen Hitzeschild und abzuschirmendem Gegenstand möglich, dass sich verschiedene Verschlüsse für die Zufuhr kühlerer Luft bei unterschiedlichen Temperaturen öffnen. Gleiches gilt grundsätzlich auch für die Verschlüsse, durch die erwärmte Luft ausströmt. Auf diese Weise kann über einen großen Temperaturbereich eine sehr konstante Temperatur im Bereich zwischen Hitzeschild und abzuschirmendem Gegenstand sichergestellt werden. Zusätzlich oder alternativ zu diesen Maßnahmen ist es ebenfalls möglich, dass sich die Verschlüsse für die Zufuhr kühlerer Luft bei einer anderen Temperatur öffnen als die Verschlüsse für die Abfuhr erwärmter Luft. In letzterem Fall ist es bevorzugt, dass sich die Zufuhrverschlüsse bei etwas höherer Temperatur öffnen als die Verschlüsse für die Abfuhr von Warmluft.

Der erfindungsgemäße Hitzeschild ist nicht auf besondere Formen oder Größen beschränkt. Beispielsweise kann es sich um einen flächigen Hitzeschild handeln, der oberhalb des abzuschirmenden Gegenstandes angebracht ist, so dass sich Warmluft unterhalb des Hitzeschildes staut. Besonders geeignet ist die Erfindung für Hitzeschilde, welche den abzuschirmenden Gegenstand im Wesentlichen allseitig umschließen. Ein vergleichbarer Effekt kann auch erreicht werden, wenn ein nach einer Seite offener Hitzeschild von einem angrenzenden Bauteil verschlossen wird. Der abzuschirmende Gegenstand wird also von dem Hitzeschild und gegebenenfalls anderen Bauteilen weitgehend eingekapselt. Dies wird in der Regel keine hermetische Einschließung bedeuten, da üblicherweise im Hitzeschild nicht hermetisch abgeschlossene Durchlässe für Zu- und Ableitungen vorhanden sein werden. Dennoch ist in diesen Fällen der Wärmeaustausch mit der Umgebung relativ eingeschränkt, so dass es sehr rasch zu einer Überhitzung der im Hitzeschild eingekapselten Komponenten kommen kann. Andererseits ist die Kaltstartphase relativ kurz, da durch den Wärmerückhalt innerhalb des Hitzeschildes die gewünschte Betriebstemperatur rasch erreicht wird. Durch das erfindungsgemäße Vorsehen wenigstens einer Ausnehmung, die durch eine in Abhängigkeit von einer Messgröße öffnende und schließende Klappe verschließbar ist, kann diese optimale Betriebstemperatur mit der erfindungsgemäßen Hitzeschildanordnung auf einfache Weise in einem gewünschten Bereich konstant gehalten werden. Der mindestens eine der den abzuschirmenden Gegenstand im Wesentlichen vollständig umschließenden Hitzeschild sorgt zudem für eine besonders gute Schallisolierung.

Die erfindungsgemäß vorgeschlagene Maßnahme lässt sich auf einfache und kostengünstige Weise ohne zusätzliche komplizierte Maßnahmen oder Komponenten in herkömmlichen Hitzeschilden verwirklichen. Insofern können die Grundkörper der erfindungsgemäßen Hitzeschilde in ihrer Ausbildung grundsätzlich demjenigen entsprechen, was bereits aus dem Stand der Technik bekannt ist. Größe, Formgebung und Materialien entsprechen also dem Stand der Technik. Bevorzugt sind Hitzeschilde in Sandwich-Bauweise, die aus zwei üblicherweise aus metallischem Material bestehenden äußeren Schichten und einer dazwischen eingebetteten isolierenden Schicht bestehen. Die Oberflächen können dabei glatt, strukturiert oder perforiert sein. Derartige Hitzeschilde sind beispielsweise in der DE 3834054 A1 und der gattungsgemäßen EP 1 775 437 der Anmelderin beschrieben. Weiterhin kann auf die GB 2270555 A und die US 2004/0142152 A1 verwiesen werden.

Die Erfindung kann grundsätzlich auf alle Hitzeschilde des Standes der Technik angewendet werden. Besonders geeignet ist die Erfindung für solche Hitzeschilde, die im Bereich hoher Temperaturentwicklung und zum Abschirmen solcher Gegenstände verwendet werden, die durch überhöhte Temperatur beschädigt werden könnten. Eine bevorzugte Verwendung der erfindungsgemäßen Hitzeschilde erfolgt daher im Bereich von Verbrennungsmotoren und hier insbesondere im Bereich der Abgasanlage. Beispiele bevorzugter Hitzeschilde sind solche für Katalysatoren, Vorkatalysatoren, Dieselpartikelfilter oder auch Turbolader. Die Erfindung kann zudem auf insbesondere metallische Unterböden oder deren Komponenten im Bereich eines Abgasstranges angewendet werden.

Die Erfindung soll nachfolgend anhand von Zeichnungen näher erläutert werden. Diese Zeichnungen dienen ausschließlich der Illustration bevorzugter Ausführungsbeispiele der Erfindung, ohne dass die Erfindung auf diese beschränkt wäre. Gleiche Teile sind in den Zeichnungen mit gleichen Bezugszeichen versehen.

In den Figuren zeigen schematisch:
- Figur 1 (a):: einen Querschnitt durch ein erstes Ausführungsbeispiel einer erfindungsgemäßen Hitzeschildanordnung zum Abschirmen eines Katalysators mit geschlossenem Verschluss;
- Figur 1 (b):: die Hitzeschildanordnung gemäß Figur 1 (a) mit geöffnetem Verschluss;
- Figur 2(a):: einen Querschnitt durch ein zweites Ausführungsbeispiels einer erfindungsgemäßen Hitzeschildanordnung zum Abschirmen eines Katalysators mit zwei geschlossenen Verschlüssen;
- Figur 2(b):: die Hitzeschildanordnung gemäß Figur 2(a) mit einem geöffneten und einem geschlossenen Verschluss;
- Figur 2(c):: die Hitzeschildanordnung gemäß Figur 2(a) mit zwei geöffneten Verschlüssen;
- Figur 3(a):: einen Querschnitt durch ein drittes Ausführungsbeispiel einer erfindungsgemäßen Hitzeschildanordnung zum Abschirmen eines Katalysators mit einem geschlossenen Verschluss, wobei der Hitzeschild auf einer Seite offen ist;
- Figur 3(b):: die Hitzeschildanordnung gemäß Figur 3(a) mit geöffnetem Verschluss;
- Figur 4:: ein Blockdiagramm zur Erläuterung der Ansteuerung einer Betätigungsvorrichtung;
- Figur 5:: einen Teilquerschnitt durch ein weiteres Ausführungsbeispiels einer erfindungsgemäßen Hitzeschildanordnung im Bereich eines Verschlusses;
- Figur 6:: eine Draufsicht auf ein weiteres Ausführungsbeispiel einer erfindungsgemäßen Hitzeschildanordnung und einen damit abgeschirmten Katalysator und
- Figur 7:: eine Draufsicht auf ein noch weiteres Ausführungsbeispiel einer erfindungsgemäßen Hitzeschildanordnung und einen damit abgeschirmten Katalysator.

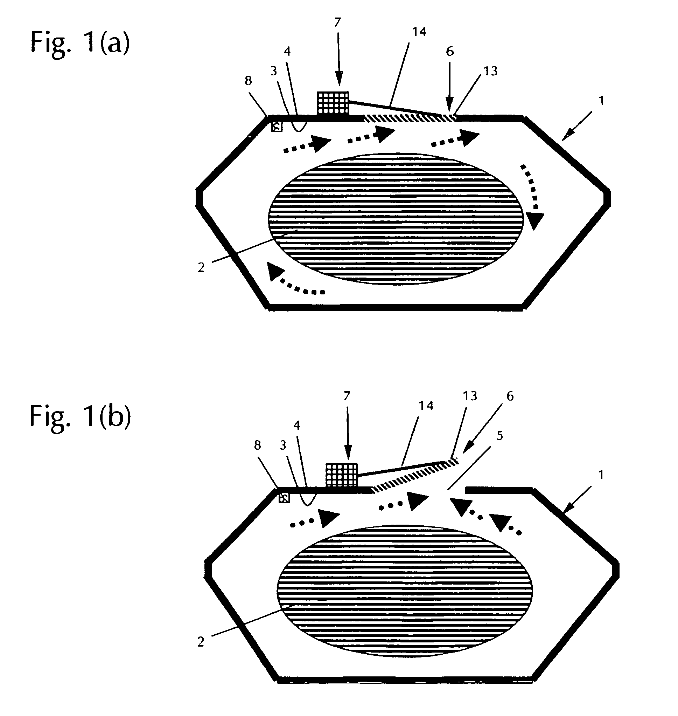

Figuren 1(a) und 1(b) zeigen ein erstes Ausführungsbeispiel einer erfindungsgemäßen Hitzeschildanordnung mit einem Hitzeschild 1, der zum Abschirmen eines im Inneren des Hitzeschildes 1 angeordneten Katalysators 2 dient. Bei dem Katalysator 2 kann es sich beispielsweise um einen Katalysator zur Reinigung von Abgasen eines Verbrennungsmotors eines Kraftfahrzeugs handeln. Die Abgasreinigungswirkung des Katalysators 2 ist innerhalb eines bestimmten Temperaturbereiches am besten. Dieser Temperaturbereich sollte möglichst schnell erreicht, aber nicht überschritten werden. Der Katalysator 2 ist im Wesentlichen vollständig und allseitig von dem Hitzeschild 1 eingeschlossen. Auf diese Weise sind der Katalysator 2 und seine Umgebung besonders gut voneinander gegen Temperatureinflüsse und Schall isoliert. Darüber hinaus dient die Einkapselung dazu, dass der Katalysator 2 rasch die für die optimale Abgasreinigung erforderliche Betriebstemperatur erreicht. Die Kaltstartphase kann also durch rasche Temperaturerhöhung im Innenraum des Hitzeschildes 1 verkürzt werden, was im Hinblick auf die zu erwartende Abgasnorm Euro 5 von erheblichem Vorteil ist.

Figur 1 (a) zeigt den Hitzeschild 1 mit dem in seinem Innenraum angeordneten Katalysator während der Aufwärmphase auf die optimale Betriebstemperatur des Katalysators 2. In dieser Phase ist der Verschluss 6, der sich auf der Oberseite des Hitzeschildes befindet und eine dort vorhandene Ausnehmung in Form einer Durchgangsöffnung im Hitzeschild verschließt, vollständig geschlossen. Die während des Betriebs des Verbrennungsmotors erzeugte Wärme verbleibt deshalb im Inneren des Hitzeschildes 1 und heizt den Katalysator rasch auf die gewünschte Betriebstemperatur auf.

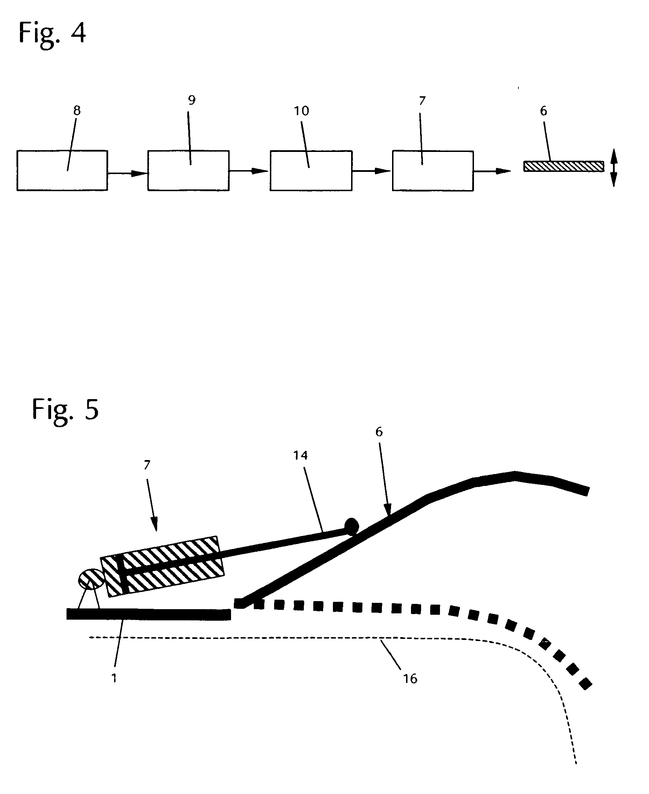

Der Verschluss 6 besteht im gezeigten Fall vollständig aus einer Klappe 13. Die Klappe ist zweckmäßig aus dem gleichen Material gefertigt wie der Hitzeschild 1 und an diesem mit wenigstens einem Scharnier befestigt. Oberhalb einer bestimmten Grenztemperatur (oder einer anderen für die Temperatur in der Umgebung des Katalysators repräsentativen Messgröße) wird die Klappe 13 mittels einer Betätigungsvorrichtung 7 in Form eines Stellmotors geöffnet. Um das Erreichen der Grenztemperatur feststellen zu können, ist auf der Innenseite 3 des Hitzeschildes 1 ein Temperatursensor 8 befestigt. Nach einer später in Zusammenhang mit Fig. 4 näher beschriebenen Auswertung tritt, wenn ein Überschreiten der festgelegten Grenztemperatur festgestellt wird, die Betätigungsvorrichtung 7 in Aktion und öffnet über eine Schub- und Zugstange 14 die Klappe 13, die mit der Stange 14 verbunden ist. Dies ist in Figur 1 (b) dargestellt.

Mit ansteigender Temperatur im Innenraum des Hitzeschildes 1 und entsprechend zunehmender Öffnung durch die Betätigungsvorrichtung 7 gibt der Verschluss 6 einen zunehmend größeren Öffnungsquerschnitt der Durchgangsöffnung 5 frei. Die Öffnung des Verschlusses 6 und die Freigabe der Durchgangsöffnung 5 bei Überschreiten der vorgegebenen Grenztemperatur sorgen dafür, dass im Inneren des Hitzeschildes 1 angestaute Wärme durch die Durchgangsöffnung entweichen kann, wie durch die Pfeile verdeutlicht. Dadurch wird die Überhitzung des Katalysators 2 im Inneren des Hitzeschildes 1 vermieden. Sinkt die Temperatur im Innenraum des Hitzeschildes 1 wieder, schließt die Betätigungsvorrichtung 7 den Verschluss in Richtung auf die in Figur 1(a) gezeigte Ausgangssituation hin zurück. Die Durchgangsöffnung 5 wird wieder vom Verschluss 6 verschlossen. Auf diese Weise wird ein zu starkes Absinken der Temperatur im Innenraum des Hitzeschildes 1 verhindert. Ein erneuter Kaltstart des Motors würde wieder bei geschlossenem Verschluss 6 erfolgen, so dass der Katalysator 2 im Inneren des Hitzeschildes 1 erneut rasch auf die nötige Betriebstemperatur gebracht werden kann. Diese Vorgänge sind mit guter Reproduzierbarkeit beliebig oft wiederholbar, so dass für optimale Betriebsbedingungen des Katalysators bei gleichzeitig sehr gutem Schallschutz gesorgt werden kann.

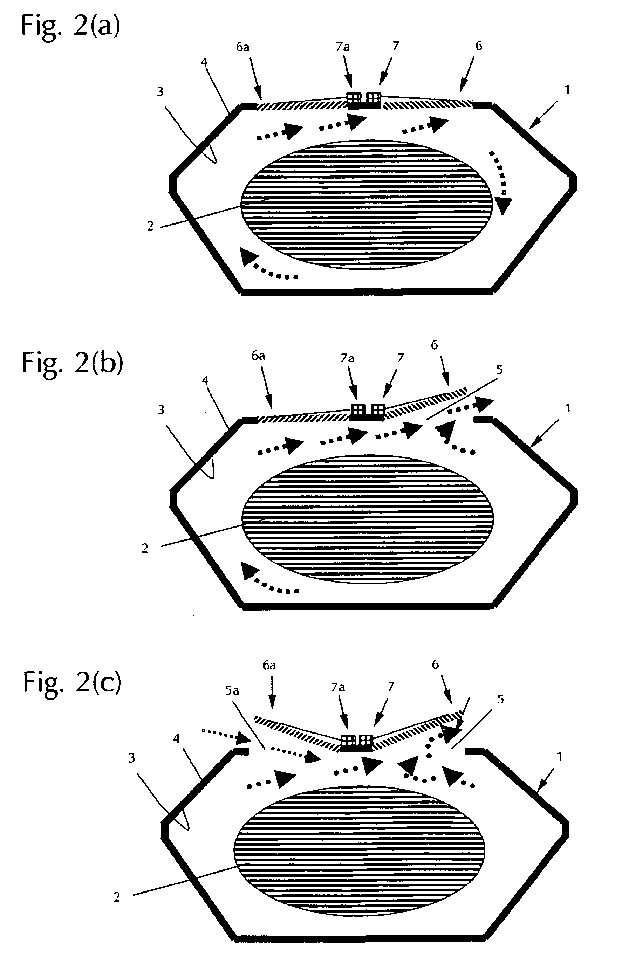

Figuren 2(a) bis 2(c) zeigen eine Weiterbildung der Hitzeschildanordnung gemäß Figuren 1(a) und 1(b). Zusätzlich zum ersten Verschluss 6 ist im Hitzeschild 1 ein weiterer Verschluss 6a vorhanden, der eine weitere Durchgangsöffnung 5a im oberen Bereich des Hitzeschildes 1 verschließen kann. Das Funktionsprinzip beider Verschlüsse entspricht demjenigen des vorangegangenen Ausführungsbeispiels. Zur Vereinfachung ist die Messvorrichtung 8 nicht mehr dargestellt.

Figur 2(a) zeigt den Zustand des Hitzeschildes 1 in der Aufwärmphase. Beide Verschlüsse 6 und 6a sind verschlossen, so dass die Wärme im Inneren des Hitzeschildes 1 verbleibt und zum raschen Erreichen der Betriebstemperatur des Katalysators 2 beiträgt. Oberhalb einer ersten Grenztemperatur, die zu einer Überhitzung des Katalysators 2 besonders im Vollortbetrieb führen könnte, wird der erste Verschluss 6 auf die vorstehend beschriebene Weise geöffnet und gibt die Durchgangsöffnung 5 auf der rechten oberen Seite des Hitzeschildes 1 frei, so dass die durch die Pfeile angezeigte Warmluft aus dem Inneren des Hitzeschildes 1 entweichen kann. Der zweite Verschluss 6a ist in dieser Phase noch geschlossen. Er wird von der zweiten Betätigungsvorrichtung 7a erst bei weiterer Temperaturerhöhung im Inneren des Hitzeschildes 1 geöffnet. Dies ist in Figur 2(c) dargestellt. Um das Öffnen der Verschlüsse 6 und 6a bei unterschiedlichen Grenztemperaturen zu erreichen, werden die Betätigungsvorrichtungen 7, 7a so angesteuert, dass sie bei unterschiedlichen Grenztemperaturen öffnen. Durch die Freigabe der Durchgangsöffnung 5a kann kühlere Luft durch diese Durchgangsöffnung ins Innere des Hitzeschildes 1 eintreten. Die kältere Luft strömt entlang der Oberseite des Katalysators 2, kühlt diesen und schleppt Warmluft durch die Durchgangsöffnung 5 auf der rechten oberen Seite des Hitzeschildes aus dessen Innerem heraus. Auf diese Weise ist auch bei sehr hoher Abgastemperatur eine effektive Kühlung des Katalysators möglich. Das beschriebene Ausführungsbeispiel ermöglicht also auch bei relativ stark schwankender Abgastemperatur, dass der Katalysator unter im Wesentlichen konstanten Temperaturbedingungen arbeiten kann.

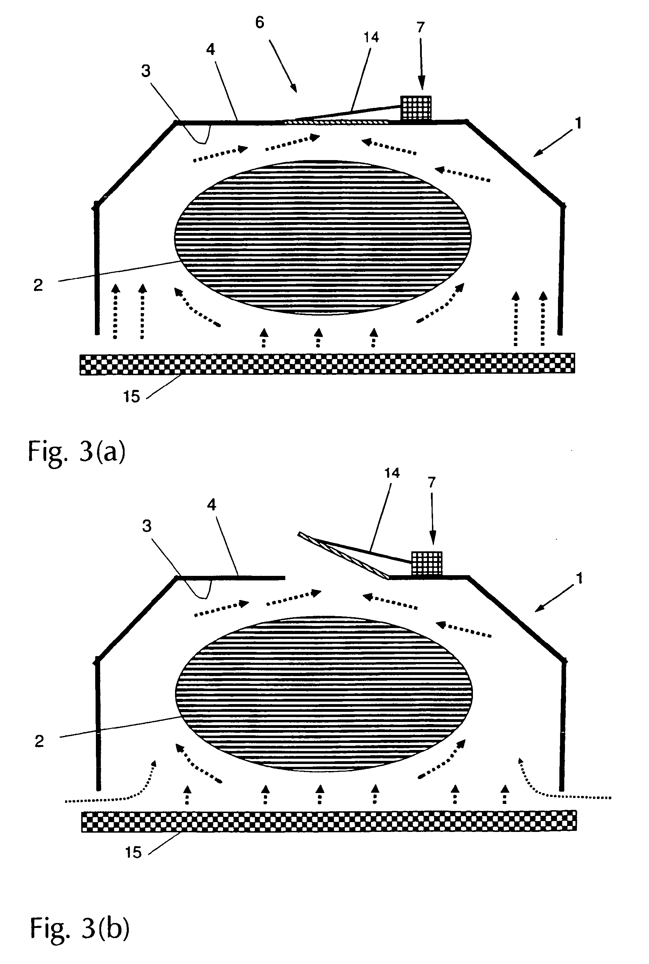

Figuren 3(a) und 3(b) zeigen eine alternative Hitzeschildanordnung, bei der der Hitzeschild 1 den Katalysator 2 nicht vollständig umgibt, sondern auf seiner Unterseite offen ist. Dabei weist die Unterkante nur einen geringen Abstand zum benachbarten Bauteil 15 auf, das im Betrieb des Motors Wärme abstrahlt. Wieder wurde auf eine Darstellung der Messvorrichtung 8 verzichtet. Wie im Ausführungsbeispiel nach Figuren 1(a) bis 1(c) weist der Hitzeschild nur einen Verschluss 6 auf. Der geringe Abstand zwischen Hitzeschild 1 und benachbartem Bauteil 15 beschleunigt das Erreichen der Betriebstemperatur des Katalysators 2 bei geschlossenem Verschluss 6. Bei Erreichen der Grenztemperatur wird der Verschluss 6 durch die Betätigungsvorrichtung 7 geöffnet, wie in Figur 3(b) zu sehen ist. Die Warmluft aus dem Innenraum des Hitzeschilds kann durch die Öffnung 5 entweichen. Der dabei entstehende Sog bewirkt, dass durch den Abstand zwischen Hitzeschild 1 und benachbartem Bauteil 15 kühlere Luft nachströmt, so dass trotz der Wärmeabstrahlung des Bauteils 15 eine optimale Betriebstemperatur des Katalysators 2 gewährleistet ist. Der Abstand zwischen Hitzeschild 1 und benachbartem Bauteil 15 kann dabei - soweit dies vom vorhandenen Platz her möglich ist - auf diese Betriebstemperatur des Katalysators 2 und die Abstrahlung des Bauteils 15 abgestimmt werden.

Figur 4 veranschaulicht in Form eines Blockdiagramms den Ablauf bei der Betätigung eines Verschlusses 6 mittels der Betätigungsvorrichtung 7. Eine Messvorrichtung 8 ermittelt kontinuierlich oder in festgelegten Intervallen Messdaten für eine für die Funktion des abzuschirmenden Gegenstandes 2 relevante Messgröße. Dies kann beispielsweise die Temperatur in der Umgebung eines Katalysators sein. Die ermittelten Messdaten werden auf an sich bekannte Art und Weise an eine Auswertungseinheit 9 übermittelt und dort ausgewertet. Die Auswertungseinheit vergleicht die Messdaten mit einem vorher festgelegten Grenzwert, beispielsweise einer Grenztemperatur. Stellt die Auswertungseinheit 9 fest, dass der Grenzwert überschritten wurde, übermittelt sie das Ergebnis an die Steuereinheit 10. Diese wiederum sendet ein Steuersignal an die Betätigungsvorrichtung 7, aufgrund dessen diese den Verschluss 6 im vorgegebenen Umfang öffnet. Der Schließvorgang läuft entsprechend ab, wenn eine Unterschreitung der Grenztemperatur festgestellt wird. Auswertungs- und Steuerungseinheit können auch in einem gemeinsamen Gerät vereinigt sein und getrennt von oder gemeinsam mit der Messvorrichtung 8 in die Hitzeschildanordnung eingebaut sein.

Im Falle eines Partikel-Filters könnte eine Messeinrichtung 8 für den Druck im Inneren des Partikel-Filters sein. Die ermittelten Messdaten werden von der Auswertungseinheit 9 in diesem Beispiel mit einem vorher festgelegten Grunddruck verglichen. Bei Überschreiten wird dies über die Steuereinheit 10 an die Betätigungsvorrichtung 7 weitergemeldet, auf Grund dessen diese den Verschluss 6 im vorgegebenen Vorgang schließt. Dieser Öffnungsvorgang läuft entsprechend ab, wenn nach z.B. oxidativer Regeneration des Partikelfilters der Grenzdruck unterschritten wird. Dabei kann auch ein zweiter Grenzdruck festgelegt werden, der unter dem ersten Grenzdruck für das Schließen liegt. Der Ablauf bei anderen Messsignalen läuft vergleichbar ab.

Figur 5 zeigt einen Teilquerschnitt einer weiteren Ausführungsform der Erfindung im Bereich eines Verschlusses 6, der von einer Betätigungsvorrichtung 7 geöffnet und geschlossen werden kann. Die Funktionsweise entspricht derjenigen der vorangegangenen Figuren. Der Verlauf des Hitzeschilds 1 und des Verschlusses 6 sind der Außenkontur des abzuschirmenden Gegenstands angepasst, dessen Außenumriss mit der Linie 16 verdeutlicht wird. Durch die Angleichung der Form kann der Hitzeschild mit Verschluss 6 sehr nah an den abzuschirmenden Gegenstand herangebracht werden. Die durchgezogene Linie bei 6 verdeutlicht die geöffnete, die darunter liegende gestrichelte Linie die geschlossene Position des Verschlusses.

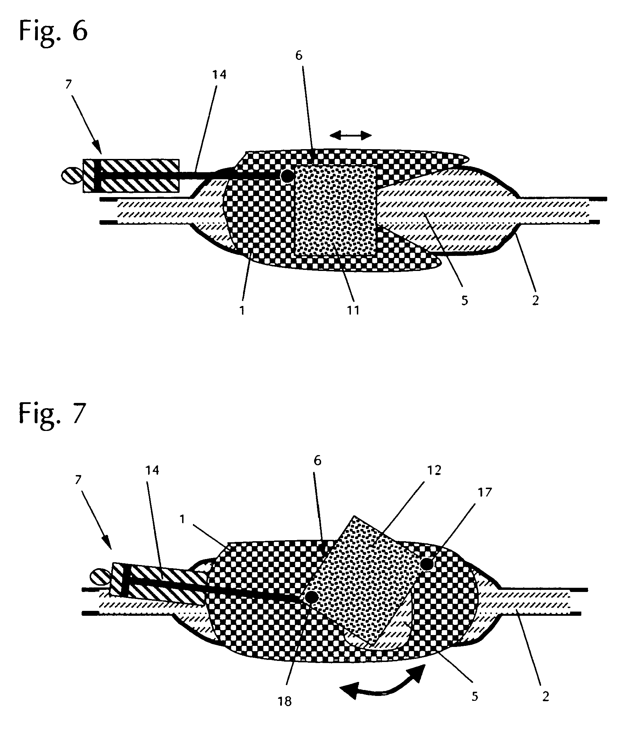

Figuren 6 und 7 zeigen alternative Ausführungsformen des Verschlusses 6. Figur 6 zeigt eine Ausführungsform, bei der die Ausnehmung 5 im Hitzeschild 1 eine Aussparung im Außenrandbereich des Hitzeschilds ist. Die Ausnehmung 5 ist mit einem Schieber 11 als Verschluss 6 verschließbar. Der Verschluss 6 kann in Pfeilrichtung mittels der Betätigungsvorrichtung 7 verschoben werden. Gezeigt ist eine Situation mit fast völlig geöffnetem Verschluss und nahezu vollständig freigegebener Öffnung 5.

Figur 7 zeigt eine der Fig. 6 ähnliche Ausführungsform, jedoch mit einem Drehschieber 12 als Verschluss 6. Der Drehschieber ist an einem Punkt 17 mittels Schraub- oder Nietverbindung am Hitzeschild 1 befestigt und an dieser Stelle drehbar gelagert. Durch Betätigung der Betätigungsvorrichtung 7, nämlich durch mehr oder weniger starkes Ausfahren der Stange 14, die am Punkt 18 drehbar am Drehschieber 12 befestigt ist, kann der Drehschieber um den Punkt 17 verschwenkt werden, wie dies mit dem Doppelpfeil verdeutlicht wird. Entsprechend wird die Durchgangsöffnung 5 im Hitzeschild mehr oder weniger stark durch den Drehschieber 12 abgedeckt.

## Patentansprüche

1. Hitzeschildanordnung mit einem Hitzeschild (1) zum Abschirmen eines Gegenstandes (2) gegen Hitze und/oder Schall mit einer dem Gegenstand (2) zugewandten Innenoberfläche (3) und einer vom Gegenstand (2) abgewandten Außenoberfläche (4) sowie einer Ausnehmung (5), die durch den Hitzeschild (1) mit Innenoberfläche (3) und Außenoberfläche (4) hindurch geht,
**dadurch gekennzeichnet,**
**dass** der Hitzeschild (1) einen Verschluss (6) zum wenigstens teilweisen Verschließen der Ausnehmung (5) aufweist und
**dass** eine Betätigungsvorrichtung (7) vorgesehen ist, welche ausgebildet ist, den Verschluss (6) in Abhängigkeit von einer für die Funktion des Gegenstandes (2) relevanten Regelgröße zu öffnen und zu schließen.

2. Hitzeschildanordnung gemäß Anspruch 1,
**dadurch gekennzeichnet,**
**dass** die Regelgröße ausgewählt ist aus wenigstens einer der folgenden Messgrößen:
- Temperatur, insbesondere Umgebungstemperatur oder Bauteiltemperatur des Gegenstands (2),
- Druck, insbesondere Innendruck des Gegenstands (2),
- Geschwindigkeit, insbesondere Strömungs- oder Fahrtgeschwindigkeit,
- Akustisches Signal, insbesondere Schalldruck,
- Abgaswert,
- Volumenstrom und
- Betriebsdauer.

3. Hitzeschildanordnung gemäß Anspruch 1 oder 2,
**dadurch gekennzeichnet,**
**dass** sie wenigstens eine Messvorrichtung (8) zur Messung der Messgröße aufweist.

4. Hitzeschildanordnung gemäß Anspruch 3,
**dadurch gekennzeichnet,**
**dass** sie ein Mittel (9) zur Auswertung der Messergebnisse sowie ein Steuerungsmittel (10) zur Steuerung der Betätigungsvorrichtung (7) aufgrund der Auswertung der Messergebnisse umfasst.

5. Hitzeschildanordnung gemäß einem der vorhergehenden Ansprüche,
**dadurch gekennzeichnet,**
**dass** die Betätigungsvorrichtung (7) eine pneumatische, hydraulische oder elektrische Betätigungsvorrichtung ist, insbesondere ein Stellmotor oder eine Unterdruckdose.

6. Hitzeschildanordnung gemäß einem der vorhergehenden Ansprüche,
**dadurch gekennzeichnet,**
**dass** die Betätigungsvorrichtung (7) ausgebildet ist, den Verschluss (6) beim Überschreiten einer bestimmten Grenzmessgröße zu öffnen und bei einer Messgröße von kleiner oder gleich der Grenzmessgröße zu schließen.

7. Hitzeschildanordnung gemäß Anspruch 6,
**dadurch gekennzeichnet,**
**dass** die Betätigungsvorrichtung (7) ausgebildet ist, die Ausnehmung (5) mit zunehmendem Abstand von der Grenzmessgröße zunehmend frei zu geben.

8. Hitzeschildanordnung nach einem der vorhergehenden Ansprüche,
**dadurch gekennzeichnet,**
**dass** der Verschluss (6) ausgebildet ist, zur Seite der Außenoberfläche (4) hin zu öffnen.

9. Hitzeschildanordnung gemäß einem der Ansprüche 1 bis 5,
**dadurch gekennzeichnet,**
**dass** die Betätigungsvorrichtung (7) ausgebildet ist, den Verschluss (6) beim Überschreiten einer bestimmten Grenzmessgröße zu schließen und bei einer Messgröße von kleiner oder gleich der Grenzmessgröße zu öffnen.

10. Hitzeschildanordnung gemäß Anspruch 9,
**dadurch gekennzeichnet,**
**dass** die Betätigungsvorrichtung (7) ausgebildet ist, die Ausnehmung (5) mit zunehmendem Abstand von der Grenzmessgröße zunehmend zu öffnen bzw. zu verschließen.

11. Hitzeschildanordnung nach einem der vorhergehenden Ansprüche,
**dadurch gekennzeichnet,**
**dass** der Verschluss (6) als Schieber (11), Drehschieber (12) oder Klappe (13) ausgebildet ist.

12. Hitzeschildanordnung nach einem der vorhergehenden Ansprüche,
**dadurch gekennzeichnet,**
**dass** wenigstens ein weiterer in Abhängigkeit von einer für die Funktion des Gegenstandes (2) relevanten Messgröße zu öffnender und schließender Verschluss (6a) zum wenigstens teilweisen Verschließen einer weiteren Ausnehmung (5a) vorhanden ist.

13. Hitzeschildanordnung nach Anspruch 12,
**dadurch gekennzeichnet,**
**dass** wenigstens eine weitere Betätigungsvorrichtung (7a) vorgesehen ist, welche ausgebildet ist, den weiteren Verschluss (6a) zu öffnen und zu schließen.

14. Hitzeschildanordnung nach Anspruch 13,
**dadurch gekennzeichnet,**
**dass** die Betätigungsvorrichtung (7a) ausgebildet ist, den weiteren Verschluss (6a) bei einem anderen Grenzmesswert zu öffnen bzw. zu schließen als die erste Betätigungsvorrichtung (7) den ersten Verschluss (6).

15. Hitzeschildanordnung nach einem der vorhergehenden Ansprüche,
**dadurch gekennzeichnet,**
**dass** der Hitzeschild (1) den abzuschirmenden Gegenstand (2) im Wesentlichen allseitig umschließt.

16. Hitzeschildanordnung nach einem der vorhergehenden Ansprüche zum Abschirmen eines Gegenstandes (2) im Bereich eines Verbrennungsmotors, insbesondere Hitzeschildanordnung mit einem Hitzeschild (1) für einen Katalysator, einen Dieselpartikelfilter, einen Turbolader oder einen Abgasstrang.

## Claims

1. A heat shield configuration having a heat shield (1) for shielding an object (2) from heat and/or noise having an internal surface (3) facing toward the object (2) and an external surface (4) facing away from the object (2) as well as an opening (5), which goes through the heat shield (1) having internal surface (3) and external surface (4),
**characterized in that** the heat shield (1) has a closure (6) for at least partially closing the opening (5), and
an actuating device (7) is provided, which is implemented to open and close the closure (6) as a function of a controlled variable relevant for the function of the object (2).

2. The heat shield configuration according to Claim 1,
**characterized in that** the controlled variable is selected from at least one of the following measured variables:
temperature, in particular ambient temperature or component temperature of the object (2), pressure, in particular internal pressure of the object (2),
velocity, in particular flow or travel velocity,
acoustic signal, in particular noise pressure,
exhaust gas value,
volume flow, and
operating time.

3. The heat shield configuration according to Claim 1 or 2,
**characterized in that** it has at least one measuring device (8) for measuring the measured variable.

4. The heat shield configuration according to Claim 3,
**characterized in that** it comprises means (9) for analyzing the measurement results and control means (10) for controlling the actuating device (7) on the basis of the analysis of the measurement result.

5. The heat shield configuration according to one of the preceding claims,
**characterized in that** the actuating device (7) is a pneumatic, hydraulic, or electrical actuating device, in particular a servomotor or a vacuum unit.

6. The heat shield configuration according to one of the preceding claims,
**characterized in that** the actuating device (7) is implemented to open the closure (6) if a specific limiting measured variable is exceeded and to close it in the event of a measured variable less than or equal to the limiting measured variable.

7. The heat shield configuration according to Claim 6,
**characterized in that** the actuating device (7) is implemented to increasingly expose the opening (5) with increasing distance from the limiting measured variable.

8. The heat shield configuration according to one of the preceding claims,
**characterized in that** the closure (6) is implemented to open toward the side of the external surface (4).

9. The heat shield configuration according to one of Claims 1 through 5,
**characterized in that** the actuating device (7) is implemented to close the closure (6) if a specific limiting measured variable is exceeded and to open it in the event of a measured variable less than or equal to the limiting measured variable.

10. The heat shield configuration according to Claim 9,
**characterized in that** the actuating device (7) is implemented to increasingly open or close the opening (5) with increasing distance from the limiting measured variable.

11. The heat shield configuration according to one of the preceding claims,
**characterized in that** the closure (6) is implemented as a slide (11), rotating slide (12), or flap (13).

12. The heat shield configuration according to one of the preceding claims,
**characterized in that** at least one further closure (6a), to be opened and closed as a function of a measured variable relevant for the function of the object (2), is provided for at least partially closing a further opening (5a).

13. The heat shield configuration according to Claim 12,
**characterized in that** at least one further actuating device (7a) is provided, which is implemented to open and close the further closure (6a).

14. The heat shield configuration according to Claim 13,
**characterized in that** the actuating device (7a) is implemented to open or close the further closure (6a) at a different limiting measured value than the first actuating device (7) of the first closure (6).

15. The heat shield configuration according to one of the preceding claims,
**characterized in that** the heat shield (1) encloses the object (2) to be shielded essentially on all sides.

16. The heat shield configuration according to one of the preceding claims for shielding an object (2) in the area of an internal combustion engine, in particular a heat shield configuration having a heat shield (1) for a catalytic converter, a diesel particulate filter, a turbocharger, or an exhaust system.

## Revendications

1. Dispositif de bouclier thermique avec un bouclier thermique (1) destiné à isoler un objet (2) de la chaleur et/ou du bruit muni d'une surface intérieure (3) tournée vers l'objet (2) et d'une surface extérieure (4) tournée à l'opposé de l'objet (2) ainsi que d'un évidement (5) qui traverse le bouclier thermique (1) avec la surface intérieure (3) et la surface extérieure (4), **caractérisé en ce que** le bouclier thermique (1) comporte un couvercle (6) destiné à fermer au moins partiellement l'évidement (5), et
**en ce qu'**il est prévu un dispositif d'actionnement (7) qui est conçu pour ouvrir et fermer le couvercle (6) en fonction d'une grandeur de régulation liée à la fonction de l'objet (2).

2. Dispositif de bouclier thermique selon la revendication 1, **caractérisé en ce que** la grandeur de régulation est choisie parmi les grandeurs de mesure suivantes, au minimum :
température, en particulier température ambiante ou température de pièce de l'objet (2), pression, en particulier pression à l'intérieur de l'objet (2),
vitesse, en particulier vitesse d'écoulement ou de marche,
signal acoustique, en particulier pression sonore,
taux de gaz d'échappement,
débit volumétrique et
durée de fonctionnement.

3. Dispositif de bouclier thermique selon la revendication 1 ou 2, **caractérisé en ce qu'**il comporte au moins un dispositif de mesure (8) pour la mesure de la grandeur de mesure.

4. Dispositif de bouclier thermique selon la revendication 3, **caractérisé en ce qu'**il comporte un moyen (9) pour l'analyse des résultats de mesure ainsi qu'un moyen de commande (10) pour la commande du dispositif d'actionnement (7) sur la base de l'analyse des résultats de mesure.

5. Dispositif de bouclier thermique selon l'une des revendications précédentes, **caractérisé en ce que** le dispositif d'actionnement (7) est un dispositif d'actionnement pneumatique, hydraulique ou électrique, en particulier un moteur de réglage ou une capsule à dépression.

6. Dispositif de bouclier thermique selon l'une des revendications précédentes, **caractérisé en ce que** le dispositif d'actionnement (7) est conçu pour ouvrir le couvercle (6) quand une certaine grandeur de mesure limite est dépassée et le fermer quand la grandeur de mesure est inférieure ou égale à la grandeur de mesure limite.

7. Dispositif de bouclier thermique selon la revendication 6, **caractérisé en ce que** le dispositif d'actionnement (7) est conçu pour dégager de plus en plus l'évidement (5) quand l'écart par rapport à la grandeur de mesure limite augmente.

8. Dispositif de bouclier thermique selon l'une des revendications précédentes, **caractérisé en ce que** le couvercle (6) est conçu pour s'ouvrir vers le côté de la surface extérieure (4).

9. Dispositif de bouclier thermique selon l'une des revendications 1 à 5, **caractérisé en ce que** le dispositif d'actionnement (7) est conçu pour fermer le couvercle (6) quand une certaine grandeur de mesure limite est dépassée et l'ouvrir quand la grandeur de mesure est inférieure ou égale à la grandeur de mesure limite.

10. Dispositif de bouclier thermique selon la revendication 9, **caractérisé en ce que** le dispositif d'actionnement (7) est conformé pour ouvrir ou fermer de plus en plus l'évidement (5) quand l'écart par rapport à la grandeur de mesure limite augmente.

11. Dispositif de bouclier thermique selon l'une des revendications précédentes, **caractérisé en ce que** le couvercle (6) est conformé comme un tiroir (11), un tiroir rotatif (12) ou un clapet (13).

12. Dispositif de bouclier thermique selon l'une des revendications précédentes, **caractérisé en ce qu'**au moins un autre couvercle (6a) devant être ouvert et fermé en fonction de la grandeur de mesure pertinente pour le fonctionnement de l'objet (2) est prévu pour fermer au moins partiellement un autre évidement (5a).

13. Dispositif de bouclier thermique selon la revendication 12, **caractérisé en ce qu'**il est prévu au moins un autre dispositif d'actionnement (7a), qui est conçu pour ouvrir et fermer l'autre couvercle (6a).

14. Dispositif de bouclier thermique selon la revendication 13, **caractérisé en ce que** le dispositif d'actionnement (7a) est conçu pour ouvrir et fermer l'autre couvercle (6a) à une autre valeur de mesure limite que celle où le premier dispositif d'actionnement (7) ouvre et ferme le premier couvercle (6).

15. Dispositif de bouclier thermique selon l'une des revendications précédentes, **caractérisé en ce que** le bouclier thermique (1) entoure sensiblement sur tous les côtés l'objet (2) à isoler.

16. Dispositif de bouclier thermique selon l'une des revendications précédentes destiné à isoler un objet (2) dans le domaine d'un moteur à combustion interne, en particulier dispositif de bouclier thermique avec un bouclier thermique (1) pour un catalyseur, un filtre à particules pour diesel, un turbocompresseur ou un tuyau d'échappement.
